# EUROPÄISCHE PATENTANMELDUNG

(11) **EP 4 620 874 A1**
(43) Veröffentlichungstag der Anmeldung: **24.09.2025**
(21) Anmeldenummer: 25162415.1
(22) Anmeldetag: 07.03.2025
(51) Int. Cl.: B65G 51/28

(54) **STATION EINER ROHRPOSTANLAGE SOWIE VERFAHREN ZUM ANLIEFERN VON PROBEN**

(30) Priorität: 19.03.2024 AT 502412024
(71) Anmelder: Ing. Sumetzberger GmbH, 1110 Wien (AT)
(72) Erfinder: Friedrich, Peter, 1040 Wien (AT)
(74) Vertreter: Müllner, Martin

(57) **Zusammenfassung**

Bei einer Station (11) einer Rohrpostanlage zur Beförderung von Rohrposthülsen (12) ist ein zwischen zumindest zwei Positionen bewegbarer Schlitten (15) gelagert, von denen sich eine Position unterhalb eines Sende- und/oder Empfangsrohrs befindet. Am Schlitten ist ein Antrieb (13) zum Anheben und Absenken der Rohrposthülse (12) angeordnet. Weiters ist in der Station (11) eine Öffnungsmechanik (14) für den Hülsendeckel vorgesehen. Um die Bauhöhe zu reduzieren, ist die Öffnungsmechanik (14) am Schlitten (15) angebracht und mit diesem verfahrbar. Wenn die Rohrposthülse (12) oben öffnet, wenn sie durch den Antrieb (13) angehoben wird, dann eignet sich diese Station zum Einbau in einen Probensorter (21) zur Aufnahme sortierter Proberöhrchen (19), wobei das Fahrrohr (17) nach oben wegführen kann.

## Beschreibung

### Technisches Gebiet

Die vorliegende Erfindung betrifft eine Station einer Rohrpostanlage zur Beförderung von Rohrposthülsen mit einem Hülsendeckel, wobei in der Station ein zwischen zumindest zwei Positionen bewegbarer Schlitten gelagert ist, von denen sich eine Position unterhalb eines Sende- und/oder Empfangsrohrs befindet, wobei am Schlitten ein Antrieb zum Anheben und Absenken der Rohrposthülse angeordnet ist und wobei weiters in der Station eine Öffnungsmechanik zum Öffnen des Hülsendeckels vorgesehen ist. Sie betrifft weiters Verfahren zum Anliefern von Proben.

### Stand der Technik

Rohrpoststationen sind seit langer Zeit bekannt. und zeigen Rohrpoststationen, die sich selbst automatisch öffnen. zeigt eine Rohrpoststation, bei der der Hülsendeckel zum Öffnen um eine Drehachse, die parallel zur Hülsenachse ist und sich am Rand des Hülsendeckels befindet, geschwenkt wird. In dieser Rohrpoststation ist ein Schlitten vorgesehen, mit dem die Rohrposthülse bewegt werden kann; dabei gelangt der Hülsendeckel an einen feststehenden Anschlag, sodass bei weiterer Bewegung des Schlittens die Rohrposthülse öffnet. Ähnliches gilt für die .

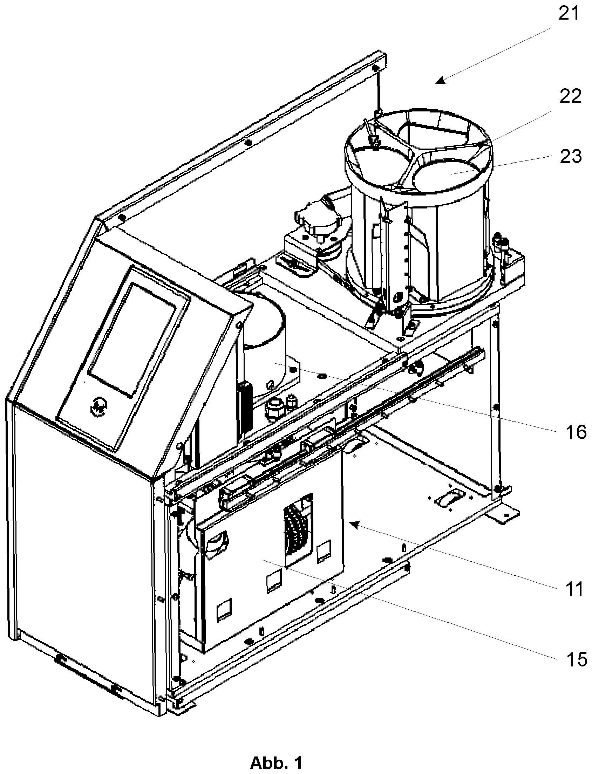

Eine Rohrpoststation der eingangs genannten Art ist aus , Fig. 1a und 1b bekannt. Diese Station dient dazu, Proberöhrchen, die in einer Rohrposthülse angeliefert werden, automatisch zu entladen und einem Analysegerät zuzuführen. Die Einzelproben werden in eine Puffereinheit ausgeschleust, von wo sie an einen Bulkloader des Analysegerätes weitergegeben werden.

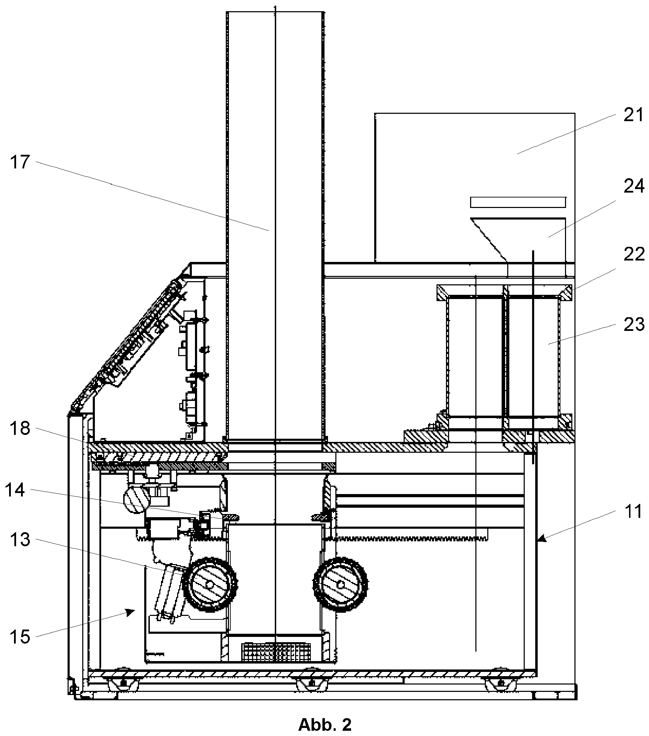

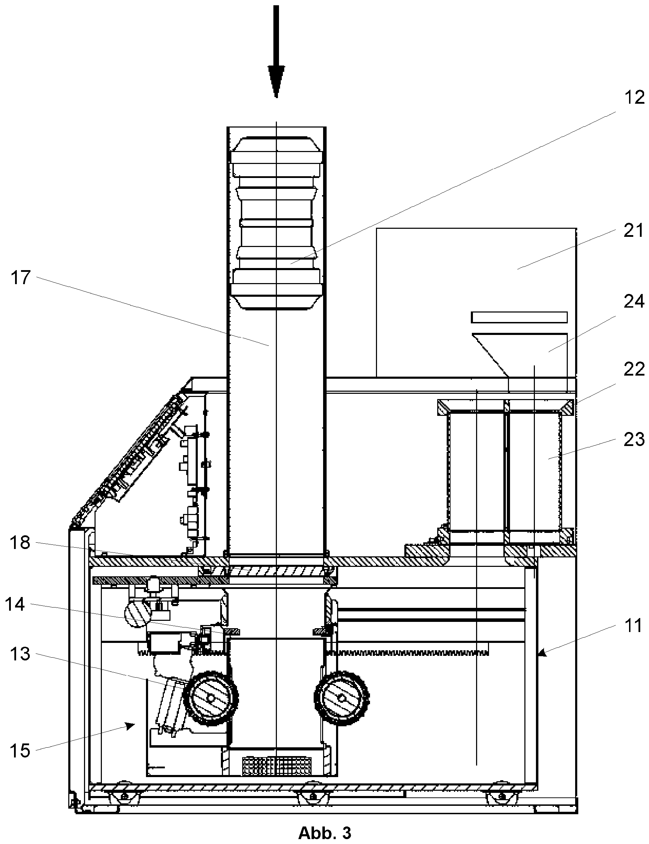

Diese Station ist für Rohrposthülsen gemäß bestimmt. Diese Rohrposthülsen weisen einen Hülsenkopf mit drei Sektoren 4 auf, vorzugsweise zwei gleich ausgebildete Hülsenköpfe an den beiden Enden der Rohrposthülse. Wenn ein Betätigungsring 19 des jeweiligen Hülsenkopfes in Richtung der Mitte der Rohrposthülse gezogen wird, verschwenken die Sektoren 4 jeweils um eine Achse 5, die tangential zum Hülsenrohr 7 liegt, und gleiten am Hülsenrohr 7 außen entlang, sodass die Öffnung 17 vollständig zugänglich ist. Zum Verschieben des Betätigungsrings 19 weist dieser eine Nut 6 auf, in die zumindest ein Halteelement 14 eingreifen kann. Die Kante des Halteelements 14, die der Rohrposthülse zugewandt ist, weist eine Ausnehmung 15 auf, die der Kontur der Nut 6 angepasst ist. Wenn das Halteelement 14 in die Nut 6 eingeschoben wird und dann das Hülsenrohr 7 durch einen Antrieb verschoben (gemäß der Fig. 2 und 3 dieser Schrift angehoben) wird, dann bewegt sich der Betätigungsring 19 gegenüber dem Hülsenrohr 7 und die Rohrposthülse öffnet. Wird das Hülsenrohr 7 in die Gegenrichtung verschoben (gemäß Fig. 2 und 3 dieser Schrift abgesenkt), schließt die Rohrposthülse wieder.

Problematisch bei dieser Anwendung ist, dass nur vorsortierte, also typenreine Proben in dieses Analysegerät eingefüllt werden dürfen, da für verschiedene Probentypen verschiedene Analysegeräte notwendig sind. In Zentrallabors werden daher teilweise Probensorter eingesetzt. Die aus der oben genannten , Fig. 1a und 1b bekannte Rohrpoststation ist auch geeignet, die Proben an solch einen Probensorter auszugeben. Hier werden die unterschiedlichen Probentypen in einen Bulk geleert, vereinzelt, gescannt, registriert und sortiert - d.h. in zugeteilte Schubladen weitergeschleust.

Derzeit werden die Schubladen manuell in den Bulkloader des entsprechenden Analysegeräts geleert. Wenn sich alle Geräte in einem Raum befinden, ist das auch mit relativ geringem Personalaufwand möglich. In Krankenhäusern mit dezentralen Laborräumen, wo Speziallabors auf das gesamte Gebäude verteilt sind, ist das aber mit erheblichem Logistikaufwand verbunden. Wenn das Krankenhaus mit einer Rohrpostanlage ausgestattet ist, kann man die typenreinen Proben in eine Rohrposthülse geben und an das jeweilige Labor schicken, wo sie dann von einer Vorrichtung gemäß der bereits mehrfach erwähnten , Fig. 1a und 1b in den Bulkloader des entsprechenden Analysegerätes entleert werden.

Es bietet sich daher an, hier eine Lösung zu entwickeln, damit die typenreinen Proben automatisch in eine Rohrposthülse geladen werden können. Prinzipiell könnte man eine Station gemäß der erwähnten verwenden, jedoch führt deren Fahrrohr nach unten weg. Da der Probensorter am Boden steht, bedingt dies, dass ein Bodendurchbruch für das Fahrrohr notwendig ist. Solche Bodendurchbrüche sind nachträglich (bei Bestandsbauten) oftmals nicht erlaubt, aber auch bei Neubauten wenig beliebt, weil der verbleibende Boden statisch tragfähiger ausgebildet werden muss, was die Baukosten erhöht.

Gemäß der erwähnten , Fig. 1a und 1b ist die Öffnungsmechanik ortsfest in der Station vorgesehen, und zwar in der Ausladefunktionseinheit 7, die unterhalb des Schlittens vorgesehen ist. Wird die Rohrposthülse dort vom Antrieb nach unten bewegt, öffnet sie unten, und der Inhalt fällt heraus.

Diese Lösung lässt sich nun für den erfindungsgemäß angestrebten Zweck nicht einfach umdrehen, d.h. oben/unten spiegeln: denn wenn man unterhalb der sortierten Proben eine ortsfeste Öffnungsmechanik vorsieht, steht unter der Öffnungsmechanik für den Schlitten samt Rohrposthülse nicht mehr genug Platz zur Verfügung, denn unterhalb der sortierten Proben steht kaum mehr Platz zur Verfügung als es der Höhe einer üblichen Rohrposthülse entspricht.

Es ist notwendig, die Station so kompakt zu bauen, dass sie in den Probensorter integriert werden kann, d.h. sie muss unterhalb der sortierten Proben eingebaut werden können.

### Kurzbeschreibung der Erfindung

Es ist daher Aufgabe der vorliegenden Erfindung, eine Station mit geringer Bauhöhe zu schaffen, die somit bei Anwendung unter einem Probensorter ohne Bodendurchbruch auskommt, d.h. bei der das Fahrrohr nach oben wegführt.

Diese Aufgabe wird durch eine Station der eingangs genannten Art erfindungsgemäß dadurch gelöst, dass die Öffnungsmechanik am Schlitten angebracht und mit diesem verfahrbar ist. Auf diese Weise wird die Bauhöhe deutlich verringert. Ein weiterer Vorteil besteht darin, dass die Rohrposthülse durch die Öffnungsmechanik während der Bewegung des Schlittens zusätzlich stabilisiert werden kann.

Wenn die Station zur Aufnahme von Proben verwendet werden soll, dann muss man vorsehen, dass die Rohrposthülse oben öffnet, wenn sie durch den Antrieb angehoben wird; das ist also genau gegenteilig wie bei der , Fig. 1a und 1b, wo die Rohrposthülse unten öffnet, wenn sie abgesenkt wird, damit die Proben nach unten herausfallen.

Vorzugsweise weist die Öffnungsmechanik zumindest ein Festhalteelement, vorzugsweise zwei Festhaltelemente, zum Eingriff in eine Nut eines Betätigungsrings der Rohrposthülse auf, sodass bei in die Nut eingeschobenem Halteelement der Hülsendeckel öffnet, wenn die Rohrposthülse durch den Antrieb angehoben wird.

Solch eine Station ist nicht nur für Probensorter geeignet, sondern für alle Anwendungen, bei denen Rohrposthülsen von oben befüllt werden und die einzufüllenden Gegenstände möglichst wenig hoch angehoben werden sollen. Sie ist also insbesondere auch für Tischmodule geeignet, wie weiter unten noch beschrieben werden wird.

Um nun vollautomatisch Proben an die entsprechenden Analysegeräte zu transportieren kann man erfindungsgemäß ein Verfahren zum Anliefern von Proben zu verschiedenen Analysegeräten mittels einer Rohrpostanlage vorsehen, bei dem eine Rohrposthülse von der Rohrpostanlage zu einem Probensorter transportiert wird, wo die Proben automatisch entleert und vom Probensorter sortiert werden, anschließend die sortierten Proben in einer erfindungsgemäßen Station in eine weitere Rohrposthülse gefüllt werden, die von der Station zu einem Fahrrohr der Rohrpostanlage transportiert wird, sodass die sortierten Proben durch die Rohrpostanlage zu einem geeigneten Analysegerät gebracht werden.

Die Proben werden üblicher Weise in so genannten Tischmodulen erfasst. Die erfindungsgemäße Station kann auch in solch einem Tischmodul vorteilhaft eingesetzt werden, wenn das Fahrrohr nach oben wegführt. Denn auch hier sollen die Proben von oben in die Rohrposthülse eingefüllt werden, und damit dies bequem möglich ist, soll die Probe möglichst wenig hoch gehoben werden müssen. Auch hier würde also eine ortsfeste Öffnungsmechanik eine größere Bauhöhe zur Folge haben, d.h. die Arbeit für das medizinische Personal wäre mühsamer, jede Probe müsste höher gehoben werden.

Erfindungsgemäß ist daher auch ein Verfahren zum Anliefern von Proben zu einem Analysegerät mittels einer Rohrpostanlage, wobei zumindest ein Tischmodul mit einer erfindungsgemäßen Station vorgesehen ist, möglich, wo jede Probe registriert und validiert wird und danach bei gültiger Validierung in der Station in eine Rohrposthülse befördert wird, wonach die Rohrposthülse von der Station in ein Fahrrohr der Rohrpostanlage transportiert und zu einem Analysegerät abgesendet wird.

Hier werden die Proben also bereits ganz zu Beginn registriert und validiert. Bisher geschah dies erst nach dem Entleeren im Analysegerät oder im Probensorter. Die sofortige Registrierung und Validierung hat den Vorteil, dass ein Fehler (z.B. eine falsche Kappenfarbe am Proberöhrchen) sofort bemerkt wird, wenn der Patient noch anwesend ist, sodass der Fehler durch eine neuerliche Blutabnahme korrigiert werden kann.

Das Tischmodul hat somit folgende Aufgabe: Die Proberöhrchen werden durch medizinisches Personal in einen Bulk/Laderaum des Tischmoduls eingegeben. Aus diesem Laderaum werden die Proben einzeln durch das Tischmodul gescannt und validiert, d.h. es erfolgt ein Abgleich der gescannten Probe mit den Daten im EDV-System. Wenn die Daten nicht übereinstimmen, wird die Probe aus dem Tischmodul ausgeschleust und das Personal bekommt eine entsprechende Aufforderung zur neuerlichen Blutabnahme. Bei Übereinstimmung werden die Proben unsortiert in eine Rohrposthülse gefüllt, und diese wird automatisch ohne manuelle Eingabe per Automatikrohrpost an einen Sorter geschickt. Dort werden die Proben wie beschrieben sortiert und weiter zu den entsprechenden Analysegeräten transportiert.

### Kurze Beschreibung der Zeichnungsfiguren

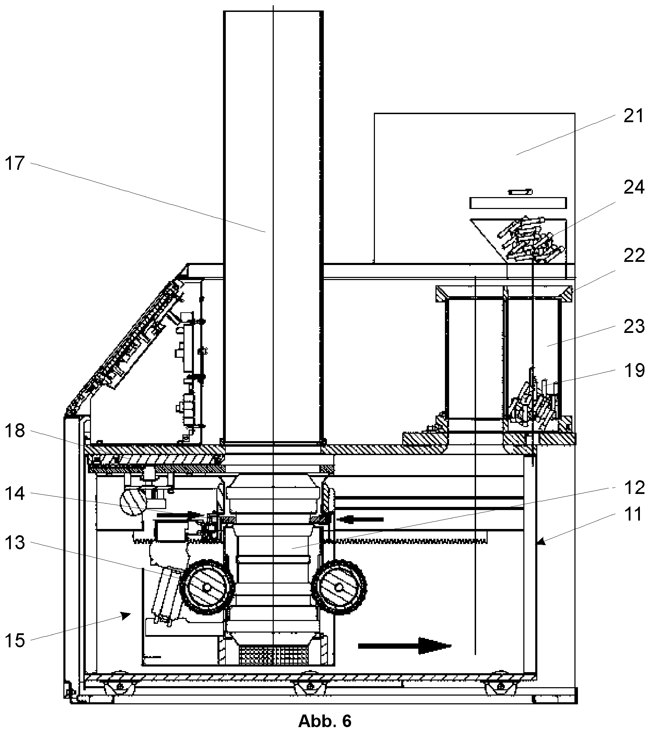

An Hand der beiliegenden Zeichnungen wird die vorliegende Erfindung näher erläutert. Es zeigt: Fig. 1 einen Probensorter mit erfindungsgemäßer Station in perspektivischer Ansicht; und die Fig. 2 bis 9 zeigen diesen Probensorter im Schnitt mit verschiedenen Zuständen der Station.

### Beschreibung der Ausführungsarten

In einen Probensorter 21 ist eine Station 11 eingebaut. Der Probensorter 21 weist einen Rotor 22 mit drei Kammern 23 auf. Jeweils eine der Kammern 23 befindet sich unter einem Trichter 24 und kann daher mit Proberöhrchen 19 befüllt werden. Unterhalb des Trichters befindet sich eine vom Probensorter 21 gesteuerte Klappe (nicht dargestellt), sodass Proberöhrchen 19 nur dann nach unten fallen, wenn sich die gewünschte Kammer 23 darunter befindet. Der Probensorter 21 sorgt dafür, dass diese Proberöhrchen 19 jeweils typenrein sind, d.h. in jede der Kammern werden jeweils nur Proberöhrchen 19 gefüllt, die vom gleichen Analysegerät ausgewertet werden können.

Unterhalb dieses Rotors 22 befindet sich die Station 11, welche einen Schlitten 15 aufweist, der zwischen zwei Positionen verfahrbar ist. Links (wie in den Figuren gesehen) befindet sich die Station unter einem Fahrrohr 17 (Fig. 2 bis 9), das über einen Rohrstutzen 16 (Fig. 1) mit der Station 11 verbunden ist. Auf dem Schlitten 15 befindet sich ein Antrieb 13, im Beispiel durch zwei Räder gebildet. Es ist aber auch ein Riemenantrieb möglich, wie er bei bekannten Rohrpoststationen oft eingesetzt wird. Oberhalb des Antriebs 13 befindet sich am Schlitten 15 eine Öffnungsmechanik 14, die im Ausführungsbeispiel durch zwei Festhalteelemente gebildet ist, die gegenüber angeordnet sind und zum Eingreifen in eine Nut des Betätigungsrings der Rohrposthülse zueinander verschoben werden können. Oberhalb des Schlittens 15 befindet sich im Rohrstutzen 16 bzw. am Ende des Fahrrohrs 17 ein Schieber 18, der aus dem Rohrstutzen 16 geschoben und in diesen hineingeschoben werden kann.

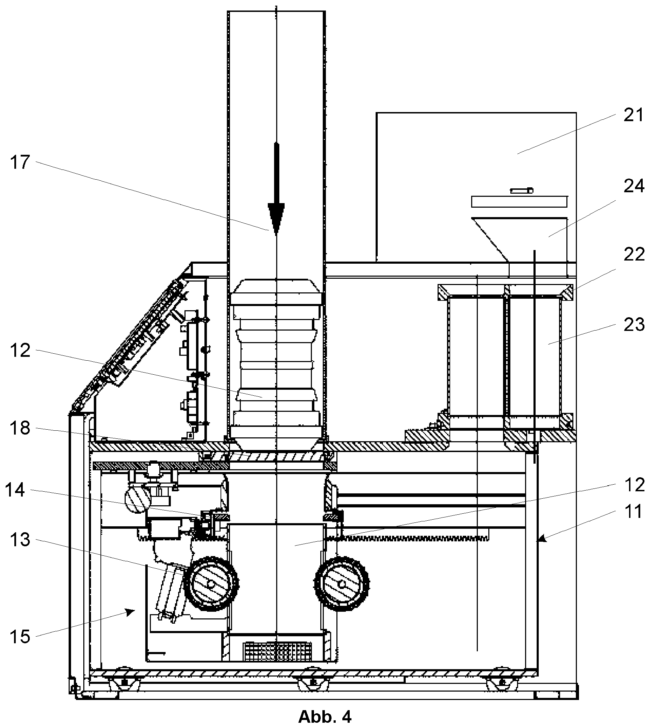

In Fig. 2 ist der Ausgangszustand dargestellt. Der Schlitten 15 befindet sich links, der Schieber 18 ist aus dem Rohrstutzen 16 herausgeschoben, sodass eine Rohrposthülse in die Station 11 gelangen kann, und es sind noch keine Proberöhrchen vorhanden. Solange keine Rohrposthülse in der Station 11 gewünscht ist, wird der Schieber 18 in den Rohrstutzen 16 geschoben (siehe Fig. 3), sodass eine ankommende Rohrposthülse 12 vom Schieber 18 gestoppt wird (siehe Fig. 4).

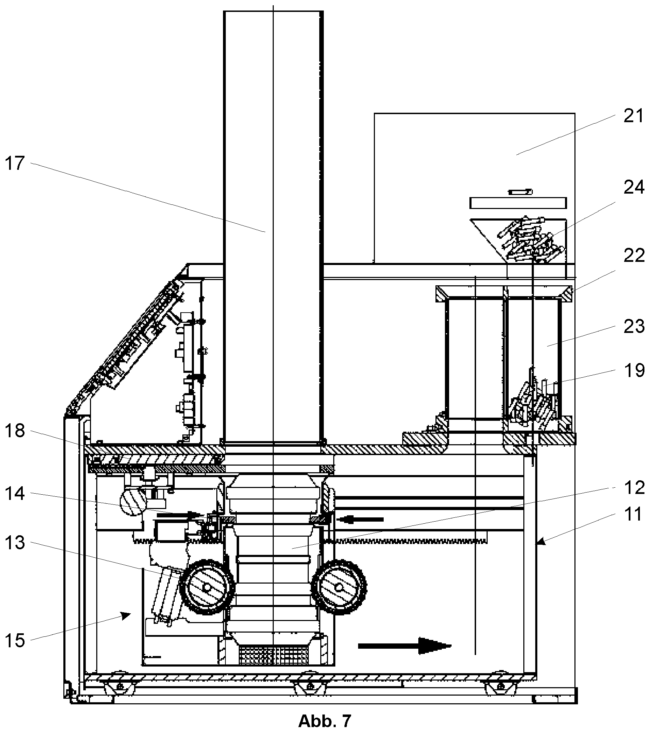

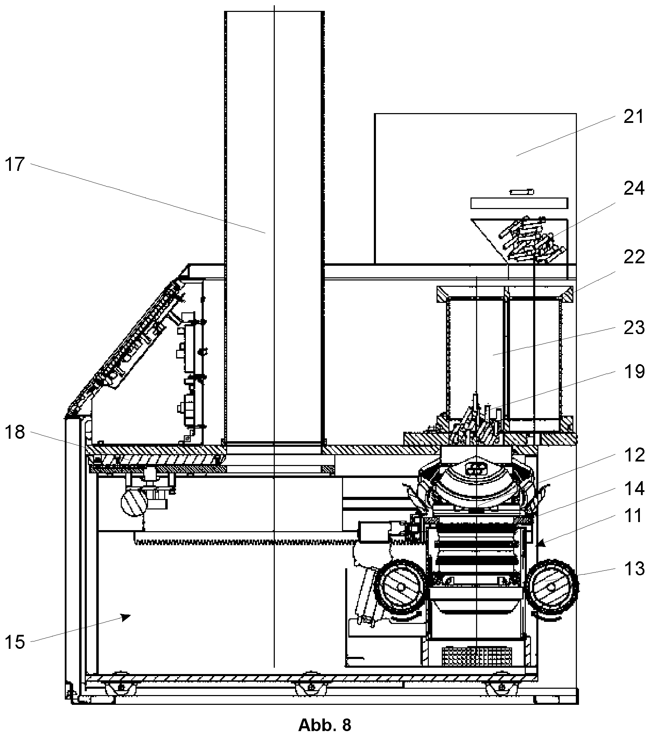

Wenn der Schieber 18 öffnet, fällt die Rohrposthülse 12 in den Schlitten 15 bis zum Antrieb 13, der die Rohrposthülse 12 sodann bis zu einem Anschlag sanft nach unten führt. Danach wird die Öffnungsmechanik 14 betätigt, d.h. deren beide Festhalteelemente werden zueinander bewegt, bis sie in die Nut des Betätigungsrings der Rohrposthülse 12 eingreifen. Die Rohrposthülse 12 ist nun stabil gehalten, der Schlitten 15 kann nach rechts (wie in den Figuren gesehen) bewegt werden (siehe Fig. 7). Nun wird die Rohrposthülse 12 vom Antrieb 13 angehoben, und da der Betätigungsring von der Öffnungsmechanik 14 festgehalten ist, öffnet die Rohrposthülse 12 (siehe Fig. 8, wo die Rohrposthülse von außen gesehen ist).

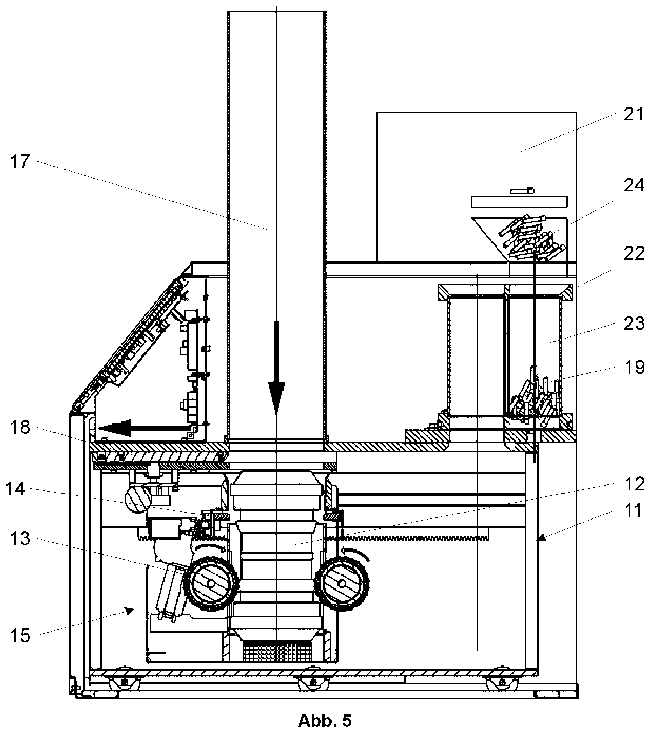

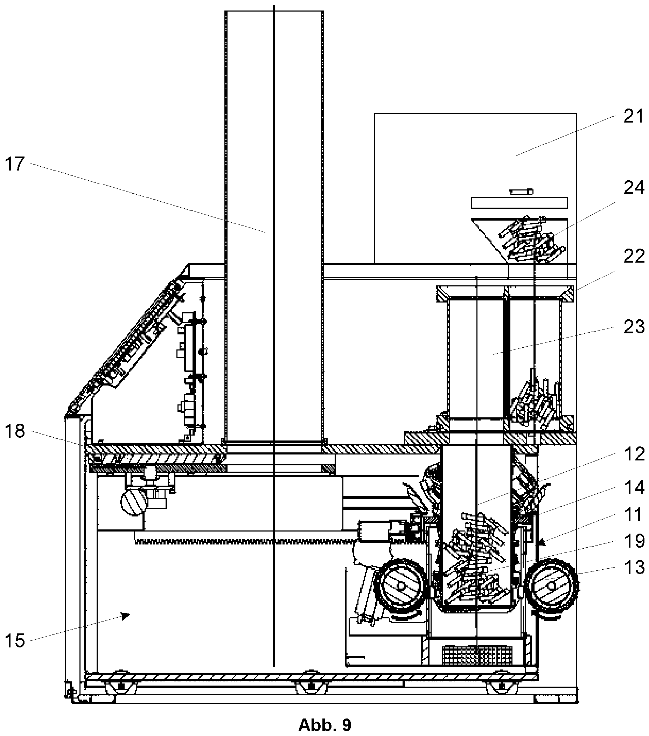

Wenn eine Kammer 23 mit Proberöhrchen 19 gefüllt ist (siehe Fig. 5), wird der Rotor 22 verdreht, bis die Kammer 23 mit den Proberöhrchen 19 über der geöffneten Rohrposthülse 12 steht. Da an dieser Stelle im Boden eine Öffnung vorgesehen ist, fallen die Proberöhrchen 19 in die geöffnete Rohrposthülse 12 (siehe Fig. 9, wo die Rohrposthülse 12 im Schnitt dargestellt ist). Während dieser Zeit kann bereits die nächste Kammer des Rotors 22 befüllt werden.

Danach erfolgt der Ablauf in umgekehrter Reihenfolge: Der Antrieb 13 bewegt die Rohrposthülse 12 nach unten, sodass sie wieder verschlossen wird, der Schlitten 15 fährt nach links, sodass die Rohrposthülse 12 unter das Fahrrohr 17 gelangt, die Öffnungsmechanik 14 gibt die Rohrposthülse 12 wieder frei, der Antrieb 13 bewegt die Rohrposthülse 12 so weit wie möglich nach oben, und dann wird die Rohrposthülse 12 pneumatisch in das Fahrrohr 17 gesaugt und zu dem Analysegerät transportiert, das zur Analyse der Proben geeignet ist.

Der Schlitten 15 kann auch zwischen mehr als zwei Positionen bewegbar sein, beispielsweise kann ein Empfangsrohr und ein davon unabhängiges Senderohr vorgesehen sein, so wie das aus EP 2463662 A2 bekannt ist. In diesem Fall kann das Empfangsrohr als Pufferspeicher für leere Rohrposthülsen dienen.

### Bezugszeichen:

- 11: Station
- 12: Rohrposthülse
- 13: Antrieb
- 14: Öffnungsmechanik
- 15: Schlitten
- 16: Rohrstutzen zum Anschluss eines Fahrrohrs
- 17: Fahrrohr
- 18: Schieber
- 19: Proberöhrchen
- 21: Probensorter
- 22: Rotor
- 23: Kammern
- 24: Trichter

## Patentansprüche

1. Station (11) einer Rohrpostanlage zur Beförderung von Rohrposthülsen (12) mit einem Hülsendeckel, wobei in der Station (11) ein zwischen zumindest zwei Positionen bewegbarer Schlitten (15) gelagert ist, von denen sich eine Position unterhalb eines Sende- und/oder Empfangsrohrs befindet, wobei am Schlitten ein Antrieb (13) zum Anheben und Absenken der Rohrposthülse (12) angeordnet ist und wobei weiters in der Station (11) eine Öffnungsmechanik (14) zum Öffnen des Hülsendeckels vorgesehen ist, **dadurch gekennzeichnet, dass** die Öffnungsmechanik (14) am Schlitten (15) angebracht und mit diesem verfahrbar ist.

2. Station nach Anspruch 1, **dadurch gekennzeichnet, dass** die Rohrposthülse (12) oben öffnet, wenn sie durch den Antrieb (13) angehoben wird.

3. Station nach Anspruch 2, **dadurch gekennzeichnet, dass** die Öffnungsmechanik (14) zumindest ein Festhalteelement, vorzugsweise zwei Festhalteelemente, zum Eingriff in eine Nut eines Betätigungsrings der Rohrposthülse (12) aufweist, sodass bei in die Nut eingeschobenem Halteelement der Hülsendeckel öffnet, wenn die Rohrposthülse (12) durch den Antrieb (13) angehoben wird.

4. Verfahren zum Anliefern von Proben zu verschiedenen Analysegeräten mittels einer Rohrpostanlage, bei dem eine Rohrposthülse von der Rohrpostanlage zu einem Probensorter (21) transportiert wird, wo die Proben automatisch entleert und vom Probensorter (21) sortiert werden, anschließend die sortierten Proben in einer Station (11) nach einem der Ansprüche 1 bis 3 in eine weitere Rohrposthülse (12) gefüllt werden, die von der Station (11) zu einem Fahrrohr (17) der Rohrpostanlage transportiert wird, sodass die sortierten Proben durch die Rohrpostanlage zu einem geeigneten Analysegerät gebracht werden.

5. Verfahren zum Anliefern von Proben zu einem Analysegerät mittels einer Rohrpostanlage, wobei zumindest ein Tischmodul mit einer Station nach einem der Ansprüche 1 bis 3 vorgesehen ist, wo jede Probe registriert und validiert wird und danach bei gültiger Validierung in der Station in eine Rohrposthülse befördert wird, wonach die Rohrposthülse von der Station in ein Fahrrohr der Rohrpostanlage transportiert und zu einem Analysegerät abgesendet wird.
